# EUROPÄISCHE PATENTSCHRIFT

(11) **EP 2 050 618 B1**
(45) Veröffentlichungstag und Bekanntmachung des Hinweises auf die Patenterteilung: **05.01.2011**
(21) Anmeldenummer: 08015161.6
(22) Anmeldetag: 28.08.2008
(51) Int. Cl.: B60Q 1/10, B60Q 1/12

(54) **Verfahren zur automatischen Justage einer Lichteinheit eines Fahrzeugs und Leuchtsystem für ein Fahrzeug**
Method for automatically adjusting a lighting unit of a vehicle and light system for a vehicle
Procédé d'ajustement automatique d'une unité d'éclairage un véhicule et système d'éclairage pour un véhicule

(30) Priorität: 17.10.2007 DE 102007049619
(43) Veröffentlichungstag der Anmeldung: 22.04.2009
(73) Patentinhaber: Audi AG, 85045 Ingolstadt (DE)
(72) Erfinder: Berlitz, Stephan, 86529 Schrobenhausen (DE); Hummel, Benjamin, 85276 Pfaffenhofen (Ilm) (DE)
(74) Vertreter: Thielmann, Frank

(56) Entgegenhaltungen:
- EP-A- 0 642 950
- EP-A- 0 867 336
- EP-A- 1 203 694
- DE-A1- 19 704 427
- FR-A- 2 848 161

## Beschreibung

Die Erfindung betrifft ein Verfahren zur automatischen Justage einer Lichteinheit eines Fahrzeugs, bei welchem mittels zumindest einer aktivierten Basis-Lichtquelle zumindest eine eine spezifische Lichtfunktion charakterisierende Lichtverteilung der Lichteinheit erzeugt wird. Des Weiteren betrifft die Erfindung ein Leuchtsystem für ein Fahrzeug, mit zumindest einer Lichteinheit, welche zumindest eine Basis-Lichtquelle aufweist, mit welcher im aktivierten Zustand zumindest eine eine spezifische Lichtfunktion charakterisierende Lichtverteilung der Lichteinheit erzeugbar ist.

Aus der DE 197 04 427 A1 ist eine Einrichtung zur Regelung der Leuchtweite von Scheinwerfern von Fahrzeugen bekannt. Die Einrichtung zur Regelung der Leuchtweite wird entweder mit dem Betrieb der Scheinwerfer aktiviert oder kann alternativ dazu ständig während des Betriebs des Fahrzeugs aktiviert sein. Die Leuchtweitenregulierungseinrichtung umfasst eine Sendeeinrichtung, eine Sensoreinrichtung sowie eine Auswerteeinrichtung. Durch die Sendeeinrichtung wird beim Betrieb der Leuchtweitenregulierungseinrichtung elektromagnetische Strahlung im sichtbaren, im infraroten, oder im ultravioletten Spektralbereich erzeugt. Mittels dieser Strahlung werden Punkte auf die Fahrbahn erzeugt, wobei abhängig von dem von diesen Punkten reflektierten Licht eine Verstellung des Scheinwerfers in vertikaler Neigung erkannt und kompensiert wird. Besonders dann, wenn das von der Sendeeinrichtung erzeugte Lichtbündel im sichtbaren Spektralbereich ist, wird dies von einem Fahrzeuginsassen beim Betrieb des Scheinwerfers stets erkannt und wirkt irritierend. Dadurch kann die Aufmerksamkeit des Fahrers beeinträchtigt werden. Darüber hinaus ist mit der vorgeschlagenen Einrichtung lediglich eine Leuchtweitenregulierung durch eine Verstellung des Scheinwerfers in einer einzigen Raumrichtung, nämlich der vertikalen Neigung, möglich.

Die Druckschrift FR 2 848 161 A beschreibt ein Verfahren zum Einstellen der Höhenausrichtung eines Scheinwerfers eines Kraftfahrzeugs. Es werden Bilder über einen vor dem Kraftfahrzeug liegenden Fahrbahnausschnitt durch eine Kamera aufgenommen. Die Bilder werden durch eine Bildverarbeitungseinheit verarbeitet. Die Bildverarbeitungseinheit bestimmt anhand der Bilder eine Horizontlinie des Fahrbahnausschnitts. Die Horizontlinie wird mit einer abgelegten Solllinie verglichen, und es wird eine Abweichung zwischen der gemessenen Horizontlinie und der Solllinie bestimmt. Die Ausrichtung des Scheinwerfers wird so eingestellt, dass diese Abweichung zwischen der gemessenen Horizontlinie und der Solllinie gegen Null tendiert. Zur genauen Bestimmung der Horizontallinie kann ein vorbestimmtes Lichtmuster durch eine zusätzliche Lichtquelle auf die Straße projiziert werden.

Aus der Druckschrift EP 0 642 950 A1 ist eine Vorrichtung zur automatischen Einstellung der Neigung eines Scheinwerfers in einem Kraftfahrzeug bekannt. Die automatische Einstellung der Neigung erfolgt in Abhängigkeit von den Neigungsveränderungen der Fahrzeugkarosserie. Eine Videokamera nimmt Bilder auf, die Informationen über Rückstreuung des Scheinwerferlichts durch die Fahrbahn enthalten. Es sind Verarbeitungsmittel bereitgestellt, die die Bilder verarbeiten und anhand der in den Bildern enthaltenen Informationen sowie anhand von gespeicherten Referenzinformationen die Veränderung der Ausrichtung des Scheinwerfers veranlassen.

Im Gegenstand gemäß Druckschrift EP 0 867 336 A1 erfolgt die Einstellung der Ausrichtung eines Scheinwerfers in Abhängigkeit von der Schärfe einer Hell-Dunkel-Grenze, d. h. in Abhängigkeit von einer Deutlichkeit eines Übergangs von einem nicht beleuchteten Bereich in einen durch den Scheinwerfer beleuchteten Bereich. Ein Sensor detektiert die jeweilige Lichtstärke einerseits eines vom nicht beleuchteten Bereich der Straße reflektierten Lichts und andererseits eines vom beleuchteten Bereich der Straße reflektierten Lichts. Abhängig von einem Vergleich der beiden Lichtstärken erfolgt die Einstellung der Ausrichtung des Scheinwerfers.

Verfahren zur Einstellung der Ausrichtung eines Scheinwerfers eines Kraftfahrzeugs sind außerdem aus den Druckschriften DE 197 04 427 A1 sowie EP 1 203 694 A2 bekannt.

Es ist Aufgabe der vorliegenden Erfindung, ein Verfahren sowie ein Leuchtsystem für ein Fahrzeug zu schaffen, bei dem die Positionsüberprüfung einer Lichteinheit flexibler und für einen Fahrzeuginsassen nicht störend erfolgen kann.

Diese Aufgabe wird durch ein Verfahren, welches die Merkmale nach Anspruch 1 aufweist, und ein Leuchtsystem, welches die Merkmale nach Anspruch 14 aufweist, gelöst.

Fahrzeugscheinwerfer müssen in der Vertikalen um ca. 1 % nach unten geneigt sein, um nicht zu blenden. Xenon-Scheinwerfer müssen dazu noch mindestens eine automatische statische Leuchtweitenregulierung besitzen. Diese kompensiert Fahrzeugneigungen, die durch unterschiedliche Beladungszustände entstehen und die wiederum zur Blendung führen können.

Die Grundeinstellung des Scheinwerfers mit der Neigung von 1 % nimmt zuerst der Fahrzeughersteller und dann meist eine Fachwerkstatt vor. Diese Grundneigung, die sich durch Erschütterungen verändern kann, wird aber nur selten kontrolliert. Dazu kann es zur Blendung kommen, bei der auch eine statische oder auch dynamische Leuchtweitenregulierung nichts mehr ändern kann.

Bei Kurvenlichtscheinwerfern kommt noch die horizontale Einstellung hinzu. Wenn diese verstellt ist, schwenkt in Kurven der Scheinwerfer entweder zu stark oder zu wenig und bringt das emittierte Licht entweder in Richtung des Gegenverkehrs oder zu weit in Richtung nach außen in die Fahrbahnumgebung.

Bei dem erfindungsgemäßen Verfahren wird eine automatische Justage einer Lichteinheit eines Fahrzeugs durchgeführt. Es wird mittels zumindest einer aktivierten Basis-Lichtquelle zumindest eine eine spezifische Lichtfunktion charakterisierende Lichtverteilung der Lichteinheit erzeugt. Zumindest eine optische Justage-Markierung wird im sichtbaren Spektralbereich für das menschliche Auge unsichtbar erzeugt, wobei die Justage-Markierung in einem Justagemodus der Lichteinheit mittels einer Detektoreinheit erfassbar ist und abhängig von einem Erfassen und einem Vergleichen mit einer Referenz-Markierung die Lichteinheit justiert wird. Durch eine derartige Vorgehensweise kann mittels der im Wesentlichen im Betrieb der Lichteinheit permanent erzeugten Justage-Markierung eine sehr flexible und präzise Justage der Lichteinheit im Hinblick auf deren korrekte Position durchgeführt werden. Dennoch wird die Justage-Markierung so erzeugt, dass sie vom menschlichen Auge nicht wahrgenommen wird und diese somit für einen Fahrzeuginsassen nicht störend oder irritierend wirkt. Die Aufmerksamkeit des Fahrzeuginsassen, insbesondere des Fahrers, wird somit nicht gestört.

Die erzeugte Justage-Markierung wird in einem zum Justagemodus unterschiedlichen Normalmodus in die Lichtverteilung der aktivierten Basis-Lichtquelle für das menschliche Auge unsichtbar eingebunden und wird erst im Justagemodus für die Detektoreinheit erfassbar dargestellt. Es ist vorgesehen sein, dass die Justage-Markierung in diesem Normalmodus auch für die Detektoreinheit nicht erfassbar ist, aber dennoch bereits erzeugt wird. Prinzipiell wird somit eine Vorgehensweise geschaffen, bei der die im sichtbaren Spektralbereich erzeugte Justage-Markierung weder im Justagemodus noch im Normalmodus für das menschliche Auge sichtbar wird und die Justage-Markierung nur im Justagemodus für die Detektoreinheit erfassbar dargestellt wird. Gerade dadurch kann besonders vorteilhaft die Beeinträchtigung des Fahrzeuginsassen durch störende eingeblendete Markierungen verhindert werden und dennoch die Justage in automatischer Weise äußerst flexibel und präzise durchgeführt werden.

Die Justage-Markierung stellt insbesondere eine optische Hilfskennzeichnung dar, anhand derer unerwünschte Positionsverstellungen der Lichteinheit feststellbar sind.

Die Referenz-Markierung kann eine insbesondere vor der Auslieferung des Fahrzeugs festgelegte und abgespeicherte Markierung sein, welche insbesondere in Form und/oder Abstand zur Lichteinheit dauerhaft festgelegt ist. Es kann auch vorgesehen sein, dass eine Referenz-Markierung eine nach der Auslieferung des Fahrzeugs im Betrieb des Fahrzeugs insbesondere in Form und/oder Position veränderbare Markierung ist, welche dann als Referenz für eine nachfolgende Detektion einer Form und/oder Position der Justage-Markierung als Vergleich herangezogen wird. Bei der letztgenannten Alternative wird somit die Referenz-Markierung durch zumindest eine im momentanen Betrieb der Lichteinheit vorhergehend detektierte Justage-Markierung definiert, welche dann mit einer aktuell detektierten Justage-Markierung verglichen wird. Es wird quasi nur die Justage-Markierung im zeitlichen Verlauf im Hinblick auf ihre Änderung in Form und/oder Position beobachtet. Die einer momentanen Detektion zeitlich vorgehenden Detektionen dieser Justage-Markierung in Form und/oder Position dienen dann als Referenz-Markierungen.

Insbesondere ist die Lichteinheit ein Frontscheinwerfer eines Fahrzeugs, welcher als Basis-Lichtquelle vorzugsweise zumindest eine Leuchtdiode aufweist. Vorzugsweise umfasst die Lichteinheit eine Mehrzahl von Basis-Lichtquellen in Form von Leuchtdioden. Eine Lichtfunktion, welche mit den Basis-Lichtquellen erzeugt werden kann, ist beispielsweise das Abblendlicht, das Fernlicht oder das Tagfahrtlicht.

Die optische Justage-Markierung im sichtbaren Spektralbereich wird Vorzugsweise durch eine weitere spezifische Lichtquelle erzeugt. Diese kann vorzugsweise ebenfalls eine Leuchtdiode sein. Es kann vorgesehen sein, dass diese spezifische zumindest eine weitere Lichtquelle vorzugsweise nicht zur charakterisierenden Lichtverteilung einer spezifischen Lichtfunktion beiträgt. Es kann jedoch auch vorgesehen sein, dass das von der spezifischen Lichtquelle erzeugte Licht, welches quasi zum Überdecken oder Überblenden der Justage-Markierung ausgebildet wird, auch einen Lichtanteil für die charakterisierende Lichtverteilung einer Lichtfunktion erzeugt.

Vorzugsweise wird der Justagemodus zumindest beim Starten des Fahrzeugs und/oder beim Aktivieren der Lichteinheit durchgeführt. Vorzugsweise erfolgt dies dann, wenn im Vorfeld des Fahrzeuges eine im Wesentlichen ebene Fahrbahn erkannt wird, wodurch die Justierung exakt und präzise durchgeführt werden kann. Gerade zu diesen spezifischen Betriebsphasen des Fahrzeugs und/oder der Lichteinheit kann somit zu einem sehr geeigneten Zeitpunkt im Hinblick auf die weitere Betriebsweise eine äußerst präzise Justage durchgeführt werden. Darüber hinaus ist es nicht mehr erforderlich, permanent den Justagemodus durchzuführen.

Vorzugsweise wird die Justage in zumindest zwei Raumrichtungen durchgeführt. Auch dadurch kann die Flexibilität erhöht werden und die Genauigkeit der Einstellung deutlich verbessert werden. Insbesondere ist vorgesehen, dass die Justage zumindest in vertikaler Neigungsrichtung und horizontaler Schwenkrichtung der Lichteinheit durchgeführt wird. Eine Blendung von anderen Verkehrsteilnehmern oder ein Verschwenken in eine unerwünschte Stellung kann dadurch verhindert werden. Gerade bei derartigen Verstellmöglichkeiten in mehrere Raumrichtungen kann mit dem erfindungsgemäßen Verfahren eine wesentliche Verbesserung erzielt werden, da die Komplexität einer Verstellung und Justage in zumindest zwei Raumrichtungen wesentlich besser beherrscht werden kann.

Vorzugsweise wird die zumindest eine Justage-Markierung auf der Fahrbahn vor dem Fahrzeug erzeugt. Insbesondere wird abhängig von zumindest einem spezifischen Parameter der Justage-Markierung die weitere Erfassung und der weitere Vergleich mit einer Referenz-Markierung durchgeführt. In diesem Zusammenhang kann ein Parameter beispielsweise der Abstand von dem Scheinwerfer zur Justage-Markierung sein. Ein weiterer Parameter kann beispielsweise die Formgebung und Geometrie der Justage-Markierung sein. Anhand von Abstandsabweichungen und/oder Geometrieveränderungen, beispielsweise Verzerrungen oder dergleichen, kann dann eine mögliche Fehleinstellung der Lichteinheit erkannt und anhand des Vergleichs mit Referenz-Parametern der Grad der Verstellung in zumindest einer Raumrichtung erkannt und kompensiert werden.

Es kann auch vorgesehen sein, dass eine Justage-Markierung nicht unmittelbar auf die Fahrbahn vor dem Fahrzeug erzeugt wird, sondern beispielsweise als Hologramm oder dergleichen in einem Lichtkegel eingebunden wird.

Vorzugsweise wird die Justage-Markierung als Schatten erzeugt, welcher sich zumindest bereichsweise in der Lichtverteilung der Basis-Lichtquelle erstreckt. Derartige Schattenmarkierungen sind relativ einfach und aufwandsarm zu erzeugen und erlauben dennoch eine sehr exakte Aussage dahingehend, ob ihre Position im Hinblick auf die richtige Position des Scheinwerfers korrekt oder verschoben ist.

Insbesondere wird die Justage-Markierung im Normalmodus durch das von einer Lichtquelle emittierte Licht überdeckt, so dass die Justage-Markierung durch die Detektoreinheit unerfassbar wird. In diesem Zusammenhang ist insbesondere vorgesehen, dass am Ort der Justage-Markierung die Lichtintensität am Übergang zwischen der überblendeten Schattenmarkierung und der restlichen durch die Basis-Lichtquelle erzeugten Lichtverteilung im Wesentlichen so kontinuierlich bzw. homogen verläuft, dass durch die Detektoreinheit quasi kein Unterschied mehr erkannt wird und somit die Justage-Markierung im Normalmodus nicht erfasst wird. Insbesondere ist diese Verteilung der Lichtintensität an den genannten Übergängen an der Schattenmarkierung und der restlichen Lichtverteilung durch die Basis-Lichtquelle auch so abgestimmt, dass vom menschlichen Auge quasi eine homogene Lichtverteilung erkannt wird, und die Justage-Markierung nicht erkannt wird.

Vorzugsweise wird die Justage-Markierung zur Erfassung durch die Detektoreinheit im Justagemodus für eine Zeitdauer freigegeben, welche so kurz definiert wird, dass die Justage-Markierung für das menschliche Auge unerkannt bleibt. In diesem Zusammenhang wird vorzugsweise die das die Justage-Markierung überdeckende Licht erzeugende Lichtquelle im Justagemodus zumindest zeitweise deaktiviert. Bei einer derartigen Ausführung wird quasi eine Lichtverteilung mit einer Schattenmarkierung erzeugt, welche für die Bildverarbeitung eine markante Schattenstruktur darstellt. Dies kann insbesondere durch eine Blende oder ein anderes optisches Element, wie eine Mikrooptik, eine Freiformlinse und/oder einen Freiformreflektor erzeugt werden. Diese Schattenmarkierung wird mit einer anderen Lichtquelle überstrahlt. Nur in dem Moment, in der die Detektoreinheit, insbesondere die Kamera, ihr Bild aufnimmt, wird die Lichtquelle, welche zur Überstrahlung der Schattenmarkierung aktiviert war, kurzzeitig ausgeschaltet, so dass der Markierungsschatten für die Detektoreinheit sichtbar wird. Dieses Sichtbarmachen der im für das menschliche Auge grundsätzlich sichtbaren Spektralbereich erzeugten Justage-Markierung erfolgt jedoch über einen derartig kurzen Zeitraum, dass dies dennoch vom menschlichen Auge nicht wahrgenommen werden kann. Da die Bildaufnahme relativ schnell vonstatten geht, und dies insbesondere im Zeitrahmen von maximal wenigen Millisekunden erfolgt, kann daher auch die Schattenmarkierung für eine derartig kurze Zeit in Erscheinung treten, ohne aufgrund der Trägheit des Auges vom menschlichen Auge wahrgenommen werden zu können. Obwohl die Justage-Markierung grundsätzlich im für das menschliche Auge sichtbaren Spektralbereich erzeugt wird, ist aufgrund der spezifischen Vorgehensweise diese Justage-Markierung jedoch grundsätzlich immer für einen Fahrzeuginsassen unsichtbar. Andererseits ist diese Justage-Markierung jedoch für die Detektoreinheit dann detektierbar.

Es kann auch vorgesehen sein, dass die Justage-Markierung als Licht-Markierung erzeugt wird. Bei einer derartigen Ausgestaltung ist somit kein Schatten erzeugt, sondern in inverser Ausführung eine beleuchtete Markierung vorgesehen.

Auch hier wird diese Licht-Markierung so erzeugt, dass sie vom menschlichen Auge sowohl im Justagemodus als auch im Normalmodus nicht erkannt wird. Auch hier erfolgt die Erzeugung der Licht-Markierung vorzugsweise auf der Fahrbahn im Vorfeld des Fahrzeugs. Insbesondere ist am Ort der Erzeugung der Licht-Markierung auf der Fahrbahn die Lichtintensität so, dass am Übergang zwischen der Licht-Markierung, insbesondere deren Begrenzung, ein homogener und kontinuierlicher Übergang zur Lichtintensität der durch die Basis-Lichtquellen erzeugten Lichtverteilung gegeben ist.

Dadurch kann somit insbesondere die Nichterkennung der Licht-Markierung durch das menschlichen Auge im Normalmodus erreicht werden.

Es kann vorgesehen sein, dass die Justage-Markierung als ein Teil des Lichtfelds der Lichtverteilung der Basis-Lichtquelle erzeugt wird. Bei einer derartigen Ausgestaltung kann somit vorgesehen sein, dass die Lichtquelle, welche die Justage-Markierung erzeugt, den Basis-Lichtquellen zugeordnet wird. Im Normalmodus wird somit durch die Gesamtheit der Lichtquellen die gesamte eine Lichtfunktion charakterisierende Lichtverteilung erzeugt.

Im Justagemodus wird dann insbesondere nur noch die die Justage-Markierung erzeugende Lichtquelle im aktiven Zustand betrieben, wohingegen andere Basis-Lichtquellen, insbesondere alle anderen Basis-Lichtquellen, im Justagemodus zumindest in ihrer Lichtintensität reduziert, besonders bevorzugt vollständig deaktiviert, werden. In diesem Justagemodus wird somit dann nur noch die Licht-Markierung dargestellt und kann dann von der Detektoreinheit erfasst werden.

Vorzugsweise erfolgt die Erzeugung der Erfassbarkeit der im sichtbaren Spektralbereich erzeugten Justage-Markierung über eine so kurz definierte Zeitdauer, dass die Justage-Markierung für das menschliche Auge unerkannt bleibt. Dies bedeutet, dass die Licht-Markierung quasi nur für einen so kurzen Zeitraum bestehen bleibt, dass durch das menschliche Auge nicht wahrgenommen werden kann, dass die Basis-Lichtquellen deaktiviert wurden. Das zumindest Reduzieren der Lichtintensität der Basis-Lichtquellen, insbesondere das gesamte Deaktivieren, erfolgt somit derart kurzzeitig, dass es vom menschlichen Auge nicht wahrgenommen werden kann. Es wird durch diese Ausführung wiederum ermöglicht, dass die für die Detektoreinheit Kenntlichmachung der Justage-Markierung im Justagemodus für einen Fahrer nicht erkannt und somit für ihn auch nicht störend und irritierend wirken kann. Dennoch wird erreicht, dass diese Justage-Markierung im Justagemodus sehr einfach und präzise durch die Detektoreinheit erkannt werden kann, wodurch auch sehr einfach und sehr genau auch relativ kleine Verstellungen der Lichteinheit erfasst und korrigiert werden können.

Vorzugsweise erfolgt die Reduzierung der Lichtintensität der Basis-Lichtquelle im Justagemodus über eine Zeitdauer, welche so kurz definiert wird, dass die Intensitätsreduzierung für das menschliche Auge unerkannt bleibt.

Darüber hinaus wird durch das erfindungsgemäße Verfahren der Lichtkomfort der Lichteinheit nicht eingeschränkt und dennoch ist die volle Funktionsfähigkeit für die automatische Selbstjustage der Lichteinheit gewährleistet.

Ein erfindungsgemäßes Leuchtsystem für ein Fahrzeug umfasst zumindest eine Lichteinheit, welcher zumindest eine Basis-Lichtquelle zugeordnet ist, durch welche im aktivierten Zustand zumindest eine eine spezifische Lichtfunktion charakterisierende Lichtverteilung der Lichteinheit erzeugbar ist. Mit einer Lichtquelle der Lichteinheit ist zumindest eine optische Justage-Markierung im sichtbaren Spektralbereich erzeugbar und insbesondere derart erzeugbar, dass sie für das menschliche Auge unsichtbar ist, wobei die Justage-Markierung in einem Justagemodus der Lichteinheit mittels einer Detektoreinheit erfassbar ist und abhängig von einem Erfassen und einem Vergleichen mit einer Referenz-Markierung die Lichteinheit automatisch justierbar ist.

Die Justage kann somit selbstständig sehr präzise und exakt erfolgen und ein Fahrzeuginsasse, insbesondere der Fahrer, wird in seiner Aufmerksamkeit nicht beeinträchtigt.

Vorzugsweise sind die Lichtquellen der Lichteinheit Leuchtdioden. Die Lichteinheit selbst ist vorzugsweise ein Frontscheinwerfer des Fahrzeugs. Die mit den Basis-Lichtquellen erzeugbare Lichtverteilung für eine spezifische Lichtfunktion kann beispielsweise für ein Abblendlicht oder ein Fernlicht oder ein Tagfahrtlicht realisiert sein.

Eine Lichtquelle kann als Leuchtdiode, beispielsweise auch als organische Leuchtdiode (OLED) oder als Laser, Laserscanner oder als Beamer ausgebildet sein.

Ein Fahrzeug kann eine Mehrzahl von derartig justierbaren Lichteinheiten aufweisen. Diese Lichteinheiten können gleicher oder unterschiedlicher Art und/oder gleicher oder unterschiedlicher Funktionalität sein.

Vorteilhafte Ausgestaltungen des erfindungsgemäßen Verfahrens sind als vorteilhafte Ausgestaltungen des erfindungsgemäßen Leuchtsystems anzusehen.

Ein Ausführungsbeispiel der Erfindung wird nachfolgend anhand schematische Zeichnungen näher erläutert. Es zeigen:
- Fig. 1: eine schematische Darstellung einer erfindungsgemäßen Leuchteinheit; und
- Fig. 2: ein schematisches Diagramm zur Erläuterung der Aus- und AnPhasen von Komponenten des Leuchtsystems gemäß Fig. 1.

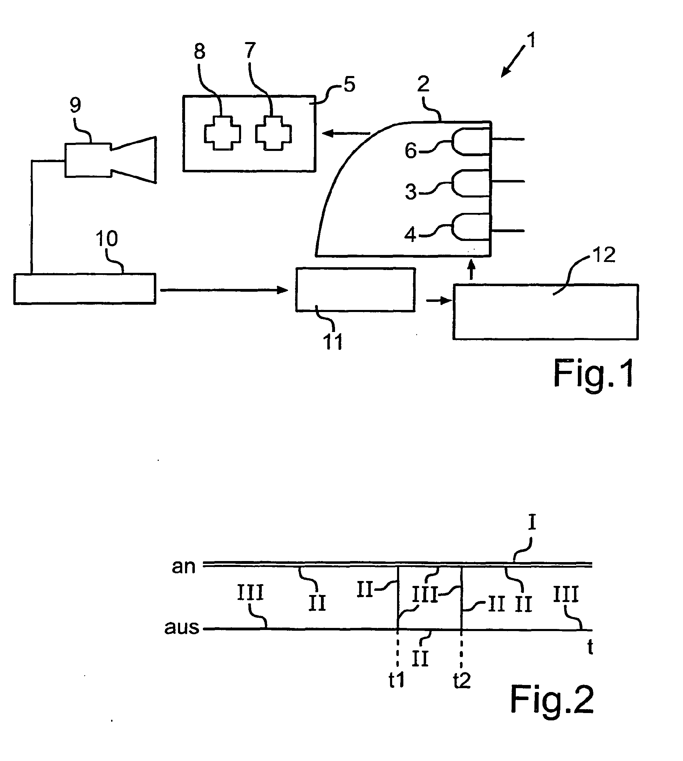

In schematischer Weise ist in Fig. 1 ein Leuchtsystem 1 für ein Fahrzeug dargestellt, welches zumindest einen Frontscheinwerfer 2, insbesondere zwei derartige Frontscheinwerfer, aufweist, welche Lichteinheiten des Leuchtsystems 1 sind.

Der Frontscheinwerfer 2 weist eine Mehrzahl von Basis-Lichtquellen auf, welche als Leuchtdioden 3 und 4 ausgebildet sind. Mittels dieser Mehrzahl von Leuchtdioden 3 und 4 wird eine eine spezifische Lichtfunktion charakterisierende Lichtverteilung 5 erzeugt. Die Lichtverteilung 5 kann beispielsweise für ein Abblendlicht oder ein Fernlicht oder ein Tagfahrtlicht sein. Die Anzahl der Basis-Lichtquellen gemäß der Darstellung in Fig. 1 ist lediglich beispielhaft. Es können auch mehr Leuchtdioden 3 und 4 als Basis-Lichtquellen vorhanden sein.

Darüber hinaus umfasst das Leuchtsystem 1 zumindest eine weitere Lichtquelle, welche ebenfalls als Leuchtdiode 6 ausgebildet ist. Im Ausführungsbeispiel ist die weitere Leuchtdiode 6 in dem Frontscheinwerfer 2 angeordnet.

Darüber hinaus umfasst das Leuchtsystem 1 zumindest ein nicht dargestelltes optisches Element, beispielsweise eine Blende und/oder einen Reflektor und/oder eine Mikrolinse und/oder eine Flüssigkristallanzeige oder Ähnliches oder Äquivalentes, welches im Strahlengang der Leuchtdiode angeordnet ist.

Durch die Leuchtdiode 6 und dieses optische Element sind im Ausführungsbeispiel zwei Justage-Markierungen erzeugbar, welche im in Fig. 1 gezeigten Ausführungsbeispiel als Schattenmarkierungen 7 und 8 realisiert sind. Die in Fig. 1 dargestellte Formgebung in Form der Kreuze der Schattenmarkierungen 7 und 8 ist lediglich beispielhaft. Eine Justage-Markierung, welche als Schattenmarkierung oder auch in inverser Weise als Licht-Markierung ausgebildet ist, kann eine vielfältige andere Formgebung aufweisen.

Darüber hinaus umfasst das Leuchtsystem 1 eine Detektionseinheit 9, welche eine Kamera ist, welche für Licht im sichtbaren Spektralbereich sensitiv ist.

Die Detektionseinheit 9 ist zur Erfassung der Schattenmarkierungen 7 und 8 ausgebildet und entsprechend orientiert angeordnet. Darüber hinaus ist die Detektoreinheit 9 mit einer Bildverarbeitungseinheit 10 verbunden. Das Leuchtsystem 1 umfasst des Weiteren ein Steuergerät 11, welches die von der Bildverarbeitungseinheit 10 generierten Informationen erhält und abhängig davon eine Aktuatorik 12 steuert. Mittels der Aktuatorik 12 kann der Frontscheinwerfer 2 in vertikaler Neigungsrichtung als auch in horizontaler Schwenkrichtung verstellt werden, so dass die gewünschte Justage und Einstellung der Referenzposition durchgeführt werden kann.

Im Nachfolgenden wird das Vorgehen zur automatischen Justage des Frontscheinwerfers 2 näher erläutert. Wird das Fahrzeug und insbesondere das Leuchtsystem 1 gestartet, so werden die Leuchtdioden 3, 4 und 6 zur Lichtemission aktiviert. Dadurch wird die Lichtverteilung 5 mit den Schattenmarkierungen 7 und 8 erzeugt. Die Schattenmarkierungen 7 und 8 werden dadurch erzeugt, dass zumindest ein optisches Element im Strahlengang vor der Leuchtdiode 3 und/oder vor der Leuchtdiode 4 einbringbar ist.

Vorzugsweise werden somit mit der Aktivierung der Leuchtdioden 3 und 4 auch automatisch die Schattenmarkierungen 7 und 8 permanent erzeugt.

In einem derartigen Normalmodus der Betriebsweise des Leuchtsystems 1 und somit auch des Frontscheinwerfers 2 werden diese Schattenmarkierungen 7 und 8 überblendet. Dazu wird die Leuchtdiode 6 aktiviert, welche im Hinblick auf Lichtintensität und Lichtverteilung so orientiert ist, dass die Schattenmarkierungen 7 und 8 im Normalmodus von dem menschlichen Auge nicht erkannt werden können. Die Schattenmarkierungen 7 und 8 werden im Ausführungsbeispiel auf der Fahrbahn vor dem Fahrzeug erzeugt. Durch die zumindest eine weitere Leuchtdiode 6, welche im Ausführungsbeispiel lediglich für die Überstrahlung und somit Unsichtbarmachung der Schattenmarkierungen 7 und 8 ausgebildet ist, werden diese dann quasi überblendet.

In diesem Normalmodus und bei dieser spezifischen Ausführung werden die Schattenmarkierungen 7 und 8 somit auch nicht von der aktivierten Detektoreinheit 9 erkannt und können von dieser auch nicht erfasst werden.

Vorzugsweise wird dann bereits mit dem Aktivieren des Frontscheinwerfers 2 oder kurze Zeit danach die Überprüfung der Position des Frontscheinwerfers 2 durchgeführt und dazu ein Justagemodus eingestellt. Vorzugsweise wird im Justagemodus über eine weitere Sensorik festgestellt, ob die Fahrbahn vor dem Fahrzeug im Wesentlichen eben ist, da diesbezüglich eine höchste Präzision im Hinblick auf die korrekte Justage gewährleistet ist.

In diesem Justagemodus wird dann die zumindest eine Leuchtdiode 6 kurzzeitig deaktiviert, so dass die im optisch sichtbaren Spektralbereich erzeugten Schattenmarkierungen 7 und 8 freigegeben werden und somit durch die Detektoreinheit 9 im Justagemodus erfassbar sind. Damit diese freigegebenen und auch somit nicht mehr überblendeten Schattenmarkierungen 7 und 8 auch nicht irritierend und störend von dem Fahrer oder dem Fahrzeuginsassen wahrgenommen werden, wird diese Freigabe für eine Zeitdauer durchgeführt, die so kurz ist, dass die Wahrnehmung der Schattenmarkierungen 7 und 8 durch das menschliche Auge nicht möglich ist. Vorzugsweise wird somit die Leuchtdiode 6 für eine Zeitdauer im einstelligen Millisekundenbereich deaktiviert, so dass als Folge davon die Schattenmarkierungen 7 und 8 im Justagemodus dann auch lediglich für eine derartig kurze Zeitdauer zur Erfassung durch die Detektoreinheit 9 freigegeben werden.

Werden dann im Justagemodus die Schattenmarkierungen 7 und 8 erfasst, so wird zumindest ein diesbezüglicher Parameter ausgewertet.

Als Parameter kann in diesem Zusammenhang der Abstand der Schattenmarkierungen 7 und 8 zum Scheinwerfer 2 erfasst werden und/oder die Formgebung bzw. Geometrie der Schattenmarkierungen 7 und 8 erfasst werden.

In der Bildverarbeitungseinheit 10 wird dann ein Vergleich der erfassten Parameter der Schattenmarkierungen 7 und 8 mit dort abgelegten Referenz-Parametern von Referenz-Schattenmarkierungen durchgeführt. Abhängig von dem Vergleich kann dann eine Verstellung des Frontscheinwerfers 2 im Vergleich zu einer Referenz-Position erkannt werden. Ist eine derartige Abweichung ermittelt, so kann dies dem Steuergerät 11 mitgeteilt werden, wobei durch das Steuergerät 11 dann die Aktuatorik 12 so angesteuert wird, dass die Verstellung kompensiert wird und somit eine Justage des Frontscheinwerfers 2 in eine Referenz-Position durchgeführt werden kann. In diesem Zusammenhang ist es mit dem Leuchtsystem 1 gewährleistet, dass eine Justage sowohl in vertikaler Neigungsrichtung als auch in horizontaler Schwenkrichtung ermöglicht ist.

In Fig. 2 ist ein Diagramm gezeigt, bei dem die Synchronisierung zwischen dem Frontscheinwerfer 2 und der Detektoreinheit 9 bezüglich der Erfassung der unsichtbaren Schattenmarkierungen 7 und 8 dargestellt ist. Die Schattenmarkierungen 7 und 8 sind starr in die Lichtverteilung 5 eingebracht bzw. darin erzeugt und verändern daher ihre Position auf der Fahrbahn, wenn der Frontscheinwerfer 2 verstellt ist.

Durch den horizontalen Kurvenverlauf I ist angedeutet, dass die Leuchtdioden 3 und 4 nach deren Aktivierung sowohl im Normalmodus als auch im Justagemodus angeschaltet bleiben.

Durch den Kurvenverlauf II ist dargestellt, dass die zumindest eine Leuchtdiode 6 im Normalmodus aktiviert ist und somit eine Überstrahlung der erzeugten Schattenmarkierungen 7 und 8 durchgeführt wird. Bei dem Übergang zu einem Justagemodus wir dann die zumindest eine Leuchtdiode 6 deaktiviert, was durch den abrupten Kurvenverlauf II nach unten zum Zeitpunkt t1 dargestellt ist, wobei diesbezüglich die Deaktivierung der Leuchtdiode 6 realisiert wird.

Gleichzeitig wird dann zum Zeitpunkt t1 die Detektoreinheit 9 zur Bilderzeugung aktiviert, wobei dies durch den Kurvenverlauf III dargestellt ist. Diesbezüglich ist die Detektoreinheit 9 beispielhaft in einem vor dem Zeitpunkt t1 liegenden Normalmodus deaktiviert und wird erst zum Zeitpunkt t1, welcher dann bereits im Justagemodus ist oder den Beginn des Justagemodus darstellt, aktiviert, was durch den abrupten Anstieg des Kurvenverlaufs III dargestellt wird. In dem Zeitraum zwischen den Zeitpunkten t1 und t2 ist somit einerseits die Leuchtdiode 6 deaktiviert und andererseits die Detektoreinheit 9 aktiviert. Zum Zeitpunkt t2 wird dann die Leuchtdiode 6 wieder aktiviert und somit die Schattenmarkierungen 7 und 8 wieder überblendet. Gleichzeitig wird die Detektoreinheit 9 deaktiviert. Beide Vorgehensweisen können durch die Kurvenverläufe II und III nachvollzogen werden.

Vorzugsweise wird der Justagemodus im Hinblick auf die Erfassung der Schattenmarkierungen 7 und 8 zum Zeitpunkt t2 beendet. Die nachfolgende Bildverarbeitung und Ansteuerung der Aktuatorik 12 sowie gegebenenfalls die Verstellung des Frontscheinwerfers 2 ist vorzugsweise auch noch dem Justagemodus zugeordnet, wobei dies dann zumindest zeitweise nach dem Zeitpunkt t2 erfolgt.

Insbesondere beträgt die Zeitdauer zwischen den Zeitpunkten t1 und t2 nur wenige Millisekunden. Durch den in Fig. 2 gezeigten Verlauf der Kurvenverläufe II und III wird die Synchronisierung zwischen der Detektoreinheit 9 und der zumindest einen Überstrahlungs- bzw. Überblendungsleuchtdiode 6 erreicht.

Da die Zeitdauer zwischen den Zeitpunkten t1 und t2 sehr kurz ist und somit dann auch die Freigabe der im sichtbaren Spektralbereich erzeugten Schattenmarkierungen 7 und 8 sehr kurz ist, fallen diese dem menschlichen Auge aufgrund seiner Trägheit nicht auf. Sie sind somit sowohl im Normalmodus mit Überblendung mit dem Licht der Leuchtdiode 6 als auch im Justagemodus durch die lediglich kurzzeitige Freigabe für das menschliche Auge unsichtbar.

## Patentansprüche

1. Verfahren zur automatischen Justage einer Lichteinheit (2) eines Fahrzeugs, bei welchem mittels zumindest einer aktivierten Basis-Lichtquelle (3, 4) zumindest eine eine spezifische Lichtfunktion charakterisierende Lichtverteilung (5) der Lichteinheit (2) erzeugt wird, wobei zumindest eine optische Justage-Markierung (7, 8) im sichtbaren Spektralbereich für das menschliche Auge unsichtbar erzeugt wird, wobei die Justage-Markierung (7, 8) in einem Justagemodus der Lichteinheit (2) mittels einer Detektoreinheit (9) erfassbar ist und abhängig von einem Erfassen und einem Vergleichen mit einer Referenz-Markierung die Lichteinheit (2) justiert wird,
**dadurch gekennzeichnet, dass**
die erzeugte Justage-Markierung (7, 8) in einem zum Justagemodus unterschiedlichen Normalmodus in die Lichtverteilung (5) der aktivierten Basis-Lichtquelle (3, 4) für das menschliche Auge unsichtbar eingebunden wird und erst im Justagemodus für die Detektoreinheit (9) erfassbar dargestellt wird.

2. Verfahren nach Anspruch 1,
**dadurch gekennzeichnet, dass**
der Justagemodus zumindest beim Starten des Fahrzeugs und/oder beim Aktivieren der Lichteinheit (2) durchgeführt wird.

3. Verfahren nach einem der vorhergehenden Ansprüche,
**dadurch gekennzeichnet, dass**
die Justage zumindest in vertikaler Neigungsrichtung und horizontaler Schwenkrichtung der Lichteinheit (2) durchgeführt wird.

4. Verfahren nach einem der vorhergehenden Ansprüche,
**dadurch gekennzeichnet, dass**
die Justage-Markierung (7, 8) auf der Fahrbahn vor dem Fahrzeug erzeugt wird.

5. Verfahren nach einem der vorhergehenden Ansprüche,
**dadurch gekennzeichnet, dass**
die Justage-Markierung (7, 8) als Schatten erzeugt wird, welcher sich zumindest bereichsweise in der Lichtverteilung (5) der Basis-Lichtquelle (3, 4) erstreckt.

6. Verfahren nach Anspruch 5,
**dadurch gekennzeichnet, dass**
die Justage-Markierung (7, 8) im Normalmodus durch das von einer Lichtquelle (6) emittierte Licht überdeckt wird, so dass die Justage-Markierung (7, 8) durch die Detektoreinheit (9) unerfassbar wird.

7. Verfahren nach Anspruch 5 oder 6,
**dadurch gekennzeichnet, dass**
die Justage-Markierung (7, 8) zur Erfassung durch die Detektoreinheit (9) im Justagemodus für eine Zeitdauer freigegeben wird, welche so kurz definiert wird, dass die Justage-Markierung (7, 8) für das menschliche Auge unerkannt bleibt.

8. Verfahren nach einem der Ansprüche 6 und 7,
**dadurch gekennzeichnet, dass**
die das die Justage-Markierung (7, 8) überdeckende Licht erzeugende Lichtquelle (6) im Justagemodus zumindest zeitweise deaktiviert wird.

9. Verfahren nach einem der Ansprüche 5 bis 8,
**dadurch gekennzeichnet, dass**
die optische Justage-Markierung (7, 8) durch ein optisches Element im Strahlengang einer Lichtquelle (3, 4) erzeugt wird.

10. Verfahren nach einem der Ansprüche 1 bis 4,
**dadurch gekennzeichnet, dass**
die Justage-Markierung (7, 8) als Licht-Markierung als ein Teil des Lichtfelds der Lichtverteilung (5) der Basis-Lichtquelle (3, 4) erzeugt wird.

11. Verfahren nach Anspruch 10,
**dadurch gekennzeichnet, dass**
zur Erzeugung der Erfassbarkeit der Justage-Markierung (7, 8) die Basis-Lichtquelle (3, 4) im Justagemodus zumindest zeitweise in ihrer Lichtintensität reduziert, insbesondere deaktiviert, wird.

12. Verfahren nach Anspruch 11,
**dadurch gekennzeichnet, dass**
die Erzeugung der Erfassbarkeit der im sichtbaren Spektralbereich erzeugten Justage-Markierung (7, 8) über eine Zeitdauer erfolgt, welche so kurz definiert wird, dass die Justage-Markierung (7, 8) für das menschliche Auge unerkannt bleibt.

13. Verfahren nach Anspruch 11 oder 12,
**dadurch gekennzeichnet, dass**
die Reduzierung der Lichtintensität der Basis-Lichtquelle (3, 4) im Justagemodus auf einen Wert größer Null über eine Zeitdauer erfolgt, welche so kurz definiert wird, dass die Intensitätsreduzierung für das menschliche Auge unerkannt bleibt.

14. Leuchtsystem für ein Fahrzeug, mit zumindest einer Lichteinheit (2), welche zumindest eine Basis-Lichtquelle (3, 4) aufweist, mit welcher im aktivierten Zustand zumindest eine eine spezifische Lichtfunktion charakterisierende Lichtverteilung (5) der Lichteinheit (2) erzeugbar ist, wobei zumindest eine optische Justage-Markierung (7, 8) im sichtbaren Spektralbereich für das menschliche Auge unsichtbar erzeugbar ist, wobei die Justage-Markierung (7, 8) in einem Justagemodus der Lichteinheit (2) mittels einer Detektoreinheit (9) erfassbar ist und abhängig von einem Erfassen und einem Vergleichen mit einer Referenz-Markierung die Lichteinheit (2) automatisch justierbar ist,
**dadurch gekennzeichnet, dass**
die erzeugte Justage-Markierung (7, 8) in einem zum Justagemodus unterschiedlichen Normalmodus in die Lichtverteilung (5) der aktivierten Basis-Lichtquelle (3, 4) für das menschliche Auge unsichtbar eingebunden wird und erst im Justagemodus für die Detektoreinheit (9) erfassbar dargestellt wird.

## Claims

1. Method for automatically adjusting a lighting unit (2) of a vehicle, in which method at least one light distribution (5), characterizing a specific lighting function, of the lighting unit (2) is generated by means of at least one activated basic light source (3, 4), wherein at least one optical adjustment marking (7, 8) is generated in a way which is invisible to the human eye in the visible spectral range, wherein the adjustment marking (7, 8) can be sensed by means of a detector unit (9) in an adjustment mode of the lighting unit (2), and the lighting unit (2) is adjusted as a function of sensing and comparison with a reference marking,
**characterized in that**
in a normal mode which is different from the adjustment mode the generated adjustment marking (7, 8) is integrated into the light distribution (5) of the activated basic light source (3, 4) in a way which is invisible to the human eye, and is only represented in the adjustment mode in a way which can be sensed by the detector unit (9).

2. Method according to Claim 1,
**characterized in that**
the adjustment mode is carried out at least when the vehicle starts and/or when the lighting unit (2) is activated.

3. Method according to one of the preceding claims,
**characterized in that**
the adjustment is carried out at least in the vertical direction of inclination and the horizontal pivoting direction of the lighting unit (2).

4. Method according to one of the preceding claims,
**characterized in that**
the adjustment marking (7, 8) is generated on the carriageway in front of the vehicle.

5. Method according to one of the preceding claims,
**characterized in that**
the adjustment marking (7, 8) is generated as a shadow which extends at least in certain areas in the light distribution (5) of the basic light source (3, 4).

6. Method according to Claim 5,
**characterized in that**
in the normal mode the adjustment marking (7, 8) is covered by the light which is emitted by a light source (6) so that it becomes impossible for the adjustment marking (7, 8) to be sensed by the detector unit (9).

7. Method according to Claim 5 or 6,
**characterized in that**
the adjustment marking (7, 8) is enabled for sensing by the detector unit (9) in the adjustment mode for a period of time which is defined with such shortness that the adjustment marking (7, 8) remains indistinguishable by the human eye.

8. Method according to one of Claims 6 and 7,
**characterized in that**
the light source (6) which generates the light which conceals the adjustment marking (7, 8) is at least partially deactivated in the adjustment mode.

9. Method according to one of Claims 5 to 8,
**characterized in that**
the optical adjustment marking (7, 8) is generated by an optical element in the beam path of a light source (3, 4).

10. Method according to one of Claims 1 to 4,
**characterized in that**
the adjustment marking (7, 8) is generated as a light marking as part of the light field of the light distribution (5) of the basic light source (3, 4).

11. Method according to Claim 10,
**characterized in that**
in order to bring about the possibility of sensing the adjustment marking (7, 8), the light intensity of the basic light source (3, 4) is at least partially reduced, in particular deactivated, in the adjustment mode.

12. Method according to Claim 11,
**characterized in that**
the possibility of sensing the adjustment marking (7, 8) which is generated in the visible spectral range is brought about over a time period which is defined with such shortness that the adjustment marking (7, 8) remains indistinguishable to the human eye.

13. Method according to Claim 11 or 12,
**characterized in that**
the light intensity of the basic light source (3, 4) is reduced in the adjustment mode to a value greater than zero over a time period which is defined with such shortness that the reduction in intensity remains indistinguishable to the human eye.

14. Light system for a vehicle, having at least one lighting unit (2) which has at least one basic light source (3, 4) with which, in the activated state, at least one light distribution (5), characterizing a specific lighting function, of the lighting unit (2) can be generated, wherein at least one optical adjustment marking (7, 8) can be generated in such a way that it is invisible to the human eye in the visible spectral range, wherein the adjustment marking (7, 8) can be sensed by means of a detector unit (9) in an adjustment mode of the lighting unit (2), and the lighting unit (2) can be adjusted automatically as a function of sensing and comparison with a reference marking,
**characterized in that**
in a normal mode which is different from the adjustment mode the generated adjustment marking (7, 8) is integrated into the light distribution (5) of the activated basic light source (3, 4) in a way which is invisible to the human eye, and is only represented in the adjustment mode in a way which can be sensed by the detector unit (9).

## Revendications

1. Procédé pour l'ajustement automatique d'une unité d'éclairage (2) d'un véhicule, dans lequel au moins une distribution de la lumière (5) de l'unité d'éclairage (2) caractérisant une fonction d'éclairage spécifique est produite au moyen d'au moins une source de lumière de base activée (3, 4),
au moins un marquage d'ajustement optique (7, 8) étant produit de manière invisible pour l'oeil humain dans la plage spectrale visible, le marquage d'ajustement (7, 8) pouvant être détecté dans un mode d'ajustement de l'unité d'éclairage (2) au moyen d'une unité de détection (9) et l'unité d'éclairage (2) étant ajustée en fonction d'une détection et d'une comparaison avec un marquage de référence,
**caractérisé en ce que**
le marquage d'ajustement produit (7, 8) est incorporé de manière invisible pour l'oeil humain dans un mode normal différent du mode d'ajustement dans la distribution de la lumière (5) de la source de lumière de base activée (3, 4), et est reproduit de manière détectable pour l'unité de détection (9) seulement dans le mode d'ajustement.

2. Procédé selon la revendication 1,
**caractérisé en ce que**
le mode d'ajustement est mis en oeuvre au moins au démarrage du véhicule et/ou lors de l'activation de l'unité d'éclairage (2).

3. Procédé selon l'une quelconque des revendications précédentes,
**caractérisé en ce que**
l'ajustement est mis en oeuvre au moins dans la direction d'inclinaison verticale et dans la direction de pivotement horizontale de l'unité d'éclairage (2).

4. Procédé selon l'une quelconque des revendications précédentes,
**caractérisé en ce que**
le marquage d'ajustement (7, 8) est produit sur la chaussée devant le véhicule.

5. Procédé selon l'une quelconque des revendications précédentes,
**caractérisé en ce que**
le marquage d'ajustement (7, 8) est produit sous forme d'ombre, qui s'étend au moins en partie dans la distribution de la lumière (5) de la source de lumière de base (3, 4).

6. Procédé selon la revendication 5,
**caractérisé en ce que**
le marquage d'ajustement (7, 8) est couvert en mode normal par la lumière émise par une source de lumière (6), de sorte que le marquage d'ajustement (7, 8) ne puisse pas être détecté par l'unité de détection (9).

7. Procédé selon la revendication 5 ou 6,
**caractérisé en ce que**
le marquage d'ajustement (7, 8) est libéré de manière à pouvoir être détecté par l'unité de détection (9) en mode d'ajustement pendant une durée qui est définie de manière si courte que le marquage d'ajustement (7, 8) reste indétectable par l'oeil humain.

8. Procédé selon l'une quelconque des revendications 6 et 7,
**caractérisé en ce que**
la source de lumière (6) produisant la lumière couvrant le marquage d'ajustement (7, 8) est désactivée au moins temporairement en mode d'ajustement.

9. Procédé selon l'une quelconque des revendications 5 à 8,
**caractérisé en ce que**
le marquage d'ajustement optique (7, 8) est produit par un élément optique dans le faisceau d'une source de lumière (3, 4).

10. Procédé selon l'une quelconque des revendications 1 à 4,
**caractérisé en ce que**
le marquage d'ajustement (7, 8) est produit sous forme de marquage lumineux en tant que partie du champ lumineux de la distribution de lumière (5) de la source de lumière de base (3, 4).

11. Procédé selon la revendication 10,
**caractérisé en ce que**
pour produire la capacité de détection du marquage d'ajustement (7, 8), la source de lumière de base (3, 4) est au moins temporairement réduite en intensité lumineuse, notamment est désactivée, dans le mode d'ajustement.

12. Procédé selon la revendication 11,
**caractérisé en ce que**
la production de la capacité de détection du marquage d'ajustement (7, 8) produit dans la plage spectrale visible a lieu pendant une durée qui est définie de manière si courte que le marquage d'ajustement (7, 8) ne soit pas détectable par l'oeil humain.

13. Procédé selon la revendication 11 ou 12,
**caractérisé en ce que**
la réduction de l'intensité lumineuse de la source de lumière de base (3, 4) en mode d'ajustement a lieu à une valeur supérieure à zéro pendant une durée qui est définie de manière si courte que la réduction de l'intensité ne soit pas détectable par l'oeil humain.

14. Système d'éclairage pour un véhicule, comprenant au moins une unité d'éclairage (2), qui présente au moins une source de lumière de base (3, 4), avec laquelle, dans l'état activé, au moins une distribution de la lumière (5) de l'unité d'éclairage (2) caractérisant une fonction d'éclairage spécifique peut être produite, au moins un marquage d'ajustement optique (7, 8) pouvant être produit de manière invisible pour l'oeil humain dans la plage spectrale visible, le marquage d'ajustement (7, 8) pouvant être détecté dans un mode d'ajustement de l'unité d'éclairage (2) au moyen d'une unité de détection (9) et l'unité d'éclairage (2) pouvant être ajustée automatiquement en fonction d'une détection et d'une comparaison avec un marquage de référence,
**caractérisé en ce que**
le marquage d'ajustement produit (7, 8) est incorporé de manière invisible pour l'oeil humain dans un mode normal différent du mode d'ajustement dans la distribution de la lumière (5) de la source de lumière de base activée (3, 4), et est reproduit de manière détectable pour l'unité de détection (9) seulement dans le mode d'ajustement.
